# EUROPÄISCHE PATENTSCHRIFT

(11) **EP 0 754 805 B1**
(45) Veröffentlichungstag und Bekanntmachung des Hinweises auf die Patenterteilung: **11.09.2002**
(21) Anmeldenummer: 96109268.1
(22) Anmeldetag: 10.06.1996
(51) Int. Cl.: E02D 5/18, C04B 28/08

(54) **Baugrubenverbau, Verfahren zu seiner Herstellung sowie Baustoffgemenge dafür**
Excavation , method and material used for its manufacture
Excavation, procédé et materiau pour sa réalisation

(30) Priorität: 19.07.1995 DE 19526396
(43) Veröffentlichungstag der Anmeldung: 22.01.1997
(73) Patentinhaber: DYCKERHOFF AKTIENGESELLSCHAFT, D-65203 Wiesbaden (DE)
(72) Erfinder: Schneider, Günter, 65375 Oestrich (DE); Kühner, Ulrich, 64625 Bensheim (DE)
(74) Vertreter: Patentanwälte Dr. Solf & Zapf

(56) Entgegenhaltungen:
- EP-A- 0 262 302
- EP-A- 0 428 431
- EP-A- 0 567 025
- EP-A- 0 659 703
- DE-A- 2 810 880
- DE-A- 4 117 270
- DATABASE WPI Derwent Publications Ltd., London, GB; AN 92-373663 XP002016868 & CN-A-1 059 894 , 1.April 1992

## Beschreibung

Die Erfindung betrifft einen Baugrubenverbau zur Baugrubensicherung im Grundwasserbereich und oberhalb des Grundwasserspiegels sowie ein Verfahren zu seiner Herstellung und ein Baustoffgemenge dafür.

Derzeit sind - neben anderen Techniken, z.B. Bohrpfahlwand-Verbau - vier grundsätzlich unterschiedliche Baugrubenverbaue bekannt, nämlich der Spundwandverbau, Trägerbohlwandverbau, Schlitzwandverbau und Kombinationen dieser Verbaue.

Die Erfindung befaßt sich mit einer Kombination, bei der eine Schlitzwand verwendet wird.

In diesem Zusammenhang ist versucht worden, bei der Erstellung von Baugrubenverbauen Dichtwände im Einphasen-Schlitzwandverfahren niederzubringen, in die dann tragende Elemente wie z.B. Doppel-T-Profilträger senkrecht eingestellt wurden. Dabei fungierte die Schlitzwandmasse, u.a. als Zwischenraumfüllung. Als Baustoff wurde eine konventionelle Einphasen-Dichtwandmischung z.B. in Form einer Fertig-Trockenmischung verwendet.

Nach der Erstellung der Schlitzwand z.B. bis unterhalb der Baugrubensohle und nach Aushärtung des Baustoffs wurde die Baugrube ausgehoben, wobei die Schlitzwand baugrubenseitig bzw. an der Luftseite oberflächlich freigelegt wurde. Die Einphasenmasse sollte die Abdichtung der Baugrube gegen Eindringen von Wasser gewährleisten. Die aus dem Wasser- und Erddruck resultierenden Kräfte sollten von den tragenden Elementen, z.B. den Doppel-T-Profilträgern, und der als Ausfachung wirkenden Einphasenmasse sowie gegebenenfalls von weiteren Aussteifungselementen oder Verpreßankern oder anderen Bewehrungselementen übernommen werden.

Aus der DE-A-28 10 880 ist ein Verfahren zum Schutz einer Baugrube vor eindringendem Wasser und zum Abfangen des Drucks des Erdreichs in Richtung auf die Baugrube mittels einer Dichtungswand mit lotrecht eingestellten Trägern bekannt. Bei diesem Verfahren soll eine praktische Wasserdichtigkeit und zugleich ein Abfangen des Drucks dadurch erreicht werden, daß vor dem Ausheben der Baugrube um die Baugrube herum eine Schlitzwand aus einer sich verfestigenden Stützflüssigkeit eingebracht wird, die nach ihrer Verfestigung praktisch wasserundurchlässig, witterungsbeständig und alterungsbeständig ist. Bei dieser Stützflüssigkeit handelt es sich um eine Stützflüssigkeit nach dem sogenannten Einphasen-Verfahren, d.h. die Stützflüssigkeit wird nach dem Ausheben des Schlitzes nicht durch eine Betonsuspension ersetzt sondern erhärtet selbst durch einen Zementzusatz. Um diese erhärtete Schlitzwand zu verfestigen so daß sie auch Drücke abfangen kann, schlägt diese Druckschrift vor, die Schlitzwand mit Doppelträgern zu verstärken.

Die Anwendung dieser bekannten Baugrubenverbau-Kombination beinhaltet den Vorteil, daß sie erschütterungsfrei und mit relativ einfachen Mitteln und mit wenigen Maschinen platzsparend erstellt werden kann. Es hat sich aber herausgestellt, daß die tragenden Eigenschaften der Einphasenmasse nicht ausreichend sind und die dichtenden und tragenden Eigenschaften der Einphasenmasse relativ schnell während der Bauphase verloren gehen. Es tritt unkontrollierbar Rißbildung und/oder Materialabrieselung bis zum Einsturz einer Wand in der Regel in einem Zeitraum auf, in dem das Bauwerk noch nicht fertiggestellt ist und die Baugrubenwandung ihre volle Funktion erfüllen muß. Aus diesem Grund konnte das bekannte Kombinationsverfahren - obwohl es allen anderen sowohl herstellungstechnisch als auch kostenmäßig überlegen ist - praktisch nicht eingeführt werden.

Aufgabe der Erfindung ist es, einen Baugrubenverbau zu schaffen, der nach dem Aushub der Baugrube und ihrer baugrubenseitigen oberflächlichen Freilegung beliebig lange, zumindest aber so lange wie die Baugrube offen bleiben muß, unverändert und wasserdicht sowie als tragendes bzw. statisch wirkendes Element erhalten bleibt, wobei seine tragende Eigenschaft gegenüber herkömmlichen Massen erhöht sein soll.

Diese Aufgabe wird durch die Merkmale des Anspruchs 1 gelöst. Vorteilhafte Weiterbildungen der Erfindung werden in den Unteransprüchen gekennzeichnet.

Es ist eine weitere Aufgabe, ein Verfahren zur Herstellung des Baugrubenverbaus zu schaffen.

Diese Aufgabe wird durch die Merkmale des Anspruchs 21 gelöst. Vorteilhafte Weiterbildungen werden in den hiervon abhängigen Unteransprüchen gekennzeichnet.

Ferner ist es eine Aufgabe, ein Baustoffgemenge für einen Baugrubenverbau zu schaffen.

Diese Aufgabe wird durch die Merkmale des Anspruchs 44 gelöst. Vorteilhafte Weiterbildungen werden in den hiervon abhängigen Unteransprüchen gekennzeichnet.

Nach der Erfindung wird für den Baugrubenverbau bzw. in einem Verfahren zum Herstellen eines Baugrubenverbaus eine Einphasen-Schlitzwandmasse mit dem erfindungsgemäßen Baustoffgemenge verwendet, die einen porösen, wasserspeichernden Leichtzuschlagstoff enthält, der in der Erhärtungsphase des Baustoffs, in der der Baustoff Wasser chemisch und adsorptiv bindet, zusätzliches Wasser zurückhält und langfristig speichert, so daß der Baustoff nach dem Baugrubenaushub insbesondere auch an der freigelegten Schlitzwandoberfläche aufgrund des im Inneren der Masse gespeicherten Wassers nahezu unverändert bleibt. Der Leichtzuschlagstoff erhöht zudem die Elastizität des Wandmaterials und wirkt damit einer Rißbildung entgegen.

Überraschend ist, daß die Wasserdichtigkeit der Schlitzwand ohne weiteres gewährleistet werden kann, obwohl poröse, wassserdurchlässige Leichtzuschlagstoffe verwendet werden. Offenbar dringt feinteilige Schlitzwandmasse in die Poren der Leichtzuschlagstoffkörner ein, woraus eine Art Verankerung resultiert, die dem Wasser Wege versperrt und auch die Schubfestigkeit der Masse und damit ihre tragende Wirkung erhöht. Hauptsächlich aber wird erreicht, daß die Substanzfestigkeit der erhärteten Masse erhalten bleibt, so daß selbst bei hohen Temperaturen oder selbst bei extremen Temperaturwechseln keine zum Zerrieseln führende Veränderung erfolgt. Vorteilhaft ist auch, daß der erfindungsgemäße Baugrubenverbau im Winter anwendbar ist, weil die Masse frostbeständig ist. Nach der Erfindung gelingt es somit, eine für den Baugrubenverbau verwendbare Einphasenschlitzwandmasse zur Verfügung zu stellen, die allen Anforderungen während der Bauphase von z.B. drei bis zwölf Monaten optimal genügt.

Das an sich bekannte Kombinationsverfahren ist damit erstmals gefahrlos anwendbar geworden. Die Verwendung des die günstigen Eigenschaften gewährleistenden Mittels, nämlich des Leichtzuschlagstoffs, ist grundsätzlich widersinnig für Schlitzwanddichtmassen, die in der Regel sehr langzeitig wasserdicht sein müssen. Poröse Leichtzuschläge sind in solchen Massen "Gift", weil sie das Gegenteil garantieren, nämlich die Wasserwegigkeit. Im Baugrubenverbau hält die Wasserabdichtung der erfindungsgemäßen Einphasenmasse überraschend ausreichend lange an, so daß insoweit für die geplanten Bauphasen wasserdichte und standfeste Schlitzwände zur Verfügung gestellt werden können.

Die Einphasenmasse kann die Abdichtung der Baugrube gegen Grundwasser auch unterhalb der Baugrubensohle übernehmen, wenn die Schlitzwand bis unter die Baugrubensohle eingebracht wird.

Die Kräfte des Wasser- und Erddrucks werden von den tragenden Elementen, z.B. den Doppel-T-Profilträgern und der Ausfachung dazwischen, nämlich der erhärteten Einphasenmasse übernommen. Gegebenenfalls können zudem weitere Aussteifungselemente wie Gurte, Streifen und/oder Verpreßanker verwendet werden. Möglich ist auch, Bewehrungselemente, wie Bewehrungskörbe oder dergleichen einzubringen. Die dichtenden und tragenden Eigenschaften der Einphasenmasse gehen während der Bauphase nicht verloren, weil die Masse nicht austrocknet, Temperaturschwankungen ohne Veränderungen, z.B. ohne Rißbildung verträgt und frostbeständig ist.

Erfindungsgemäß wird ein Schlitz nach bekannten Schlitzwandverfahren hergestellt, wobei als stützende und nach der Erhärtung tragende Einphasenmasse eine Masse zusammengestellt wird, die als Ausfachung oder dergleichen Funktion Erd- und Wasserdruck übernehmen kann, insbesondere in Kombination mit anderen tragenden Elementen.

Ein besonders geeignetes Baustoffgemenge für die Einphasenmasse besteht aus folgenden Komponenten:
- Zement (Portlandzement, Hochofenzement oder dergleichen),
- gemahlener Hüttensand,
- Gesteinsmehl,
- Tonkomponenten (Bentonit, kaolinitische Tone oder dergleichen),
- wasserspeichernde Leichtzuschläge
- Zeolithe oder zeolithisierte Vulkanite.

Diese Bestandteile werden vorzugsweise in folgenden Mengen zusammengestellt, wobei die Angaben in Massenprozenten (M%) gemacht sind:
- Zement: 10 bis 30, vorzugsweise 15 bis 20 M%,
- gemahlener Hüttensand: 40 bis 80, vorzugsweise 50 bis 70 M%,
- Gesteinsmehl: 5 bis 20, vorzugsweise 10 bis 15 M%,
- Tonkomponenten: 2 bis 10, vorzugsweise 3 bis 8 M%,
- Leichtzuschläge: 2 bis 20, vorzugsweise 3 bis 10 M%,
- geeignet sind z.B. auch Zeolithe oder zeolithisierte Vulkanite: 2 bis 10, vorzugsweise 3 bis 8 M%.

In jedem Fall der Zusammensetzung ist zweckmäßigerweise anzustreben eine Zylinderdruckfestigkeit nach 28 Tagen (in Anlehnung an DIN 1045: Nennfestigkeit für B5) der erhärteten Einphasenmasse von ≥ 5 N/mm² zu erzielen. Vorzugsweise werden Druckfestigkeiten zwischen 10 und 40 N/mm² eingestellt. Die Verarbeitbarkeit der frischen Einphasenmasse sollte etwa 8 Stunden erhalten bleiben bei einer sofortigen Marshzeit von 35 bis 40 Sekunden.

Der poröse Leichtzuschlagstoff muß unter anderem inbesondere in der Lage sein, in der erhärteten Einphasenmasse Wasser zu speichern bzw. festzuhalten, selbst bei relativ hohen Temperaturen, so daß dadurch Rißbildung durch Austrocknung vermieden wird; andererseits muß der Leichtzuschlagstoff aber auch ausreichend Luftporen zur Verfügung stellen, die die Frostsicherheit der erhärteten Einphasenmasse gewährleisten. Schließlich muß der Leichtzuschlagstoff auch sicherstellen, daß die erhärtete Einphasenmasse ausreichend schubverformbar und elastisch bleibt, so daß Bewegungen ohne Rißbildung aufgefangen werden können.

Besonders geeignet sind mineralische, insbesondere geblähte Leichtzuschlagstoffe wie Perlit, Vermiculit, Bims, sowie Ziegelsplitt und Porenbetongranulat, die durch ein hohes Wasserspeichervermögen charakterisiert sind.

Die mineralischen porösen wasserspeichernden Leichtzuschlagstoffe werden mit Schüttgewichten von 50 bis 1100 kg/m³ und vorzugsweise mit einer betonanalog abgestuften Kornverteilung verwendet.

Besonders vorteilhaft ist, wenn die Einphasenmasse faserverstärkt ist, so daß ihre Festigkeiten insbesondere ihre Duktilität bzw. Schubfestigkeit erhöht wird. Verwendbar sind metallische und/oder organische und/oder mineralische Fasern in Mengen von 0,4 bis 3, vorzugsweise von 0,7 bis 2 mit einer Länge von 6 bis 50, vorzugsweise von 10 bis 30 mm.

In Kombination mit dem Zusatz von wasserspeichernden Leichtzuschlagstoffen kann der stützenden, noch nicht erhärteten Einphasenmasse mindestens ein anorganisches, hygroskopisch wirkendes Zusatzmittel oder mindestens ein anorganisches Zusatzmittel zugesetzt werden, das hygroskopische Mittel in der Einphasenmasse bildet, so daß die Wasserretention weiter erhöht wird. Beispielsweise ist in diesem Zusammenhang vorteilhaft, in der letzten Phase des Aushubs z.B. mit dem Greifer das Mittel in die stützende Einphasenmasse einzuführen und mit dem Greifer mit der Einphasenmasse zu vermischen. Verwendbar ist z.B. Magnesiumchlorid in Mengen von 0,01 bis 5 Masseprozenten. Das Magnesiumchlorid beschleunigt die Erhärtung der Einphasenmasse und wirkt in der erhärteten Masse hygroskopisch. Ebenso verwendbar sind Natriumchlorid plus Calciumhydroxid. Diese Substanzen bilden in der Einphasenmasse Calciumchlorid, das stark hygroskopisch wirkt.

Die anorganischen Zusatzmittel werden in Mengen von 0,01 bis 10 Masseprozent, insbesondere in Mengen von 0,05 bis 2 zugesetzt.

In Kombination oder alternativ zu den beschriebenen anorganischen Zusatzmitteln können auch organische Zusatzmittel zur Erhöhung des Wasserrückhaltevermögens der Einphasenmasse wie z.B. Celluloseether in Mengen von 0,01 bis 0,2, vorzugsweise von 0,05 bis 0,1 beigegeben werden. Sofern die hygroskopisch wirkenden Mittel die Erhärtung der Einphasenmasse beeinflussen, ist es zweckmäßig, die Mittel erst - wie oben beschrieben - in der letzten Phase des Aushubs einzuführen. Wenn die Mittel, wie z.B. Methylcellulose auf die Erhärtung der Einphasenmasse keine Einwirkung haben, können die Mittel bereits Bestandteil einer zur Herstellung der Einphasenmasse verwendbaren Trockenmischung oder einer bereits angemachten Einphasensuspension sein.

Der erfindungsgemäße Baugrubenverbau bleibt während der Bauphase nahezu unverändert; die Einphasenmasse trocknet nicht aus, rieselt nicht ab, reißt nicht und ist frostbeständig. Mit der Erfindung wird somit ein Baugrubenverbau geschaffen, der einfach und schonend, das heißt ohne schädliche Erschütterungen, sowie platzsparend und zeitsparend herstellbar ist, der wenig Baumaterial erfordert, ausreichend lange wasserdicht ist und mit wählbarer Bewehrung versehen werden kann.

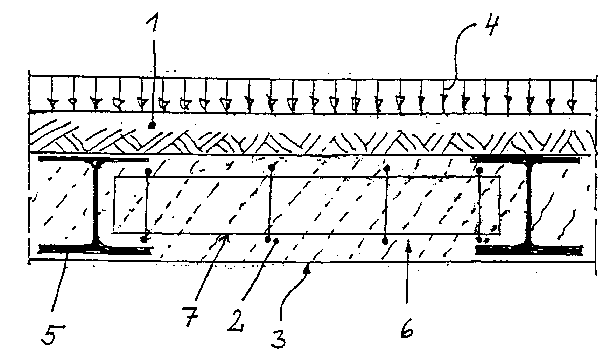

Anhand der Zeichnung wird die Erfindung im folgenden beispielhaft näher erläutert. Die einzige Figur zeigt schematisch eine Draufsicht auf einen quergeschnittenen Teilbereich eines erfindungsgemäßen Baugrubenverbaus.

Das Erdreich 1 wird durch eine erhärtete Einphasenschlitzwand 2 abgestützt, deren luftseitige bzw. baugrubenseitige Oberfläche 3 freigelegt ist. Der Erd- und Wasserdruck wird durch die Pfeile 4 symbolisiert. In die Einphasenschlitzwand 2 sind mit bestimmtem Abstand Doppel-T-Träger 5 senkrecht eingestellt. Die zwischen den Trägern 5 sitzende Einphasenmasse wirkt als Ausfachung 6. Desweiteren können in die Ausfachung 6 Bewehrungselemente z.B. in Form von Bewehrungskörben 7 eingebracht sein.

## Patentansprüche

1. Baugrubenverbau bestehend aus einer Schlitzwand (2) aus einer erhärteten Einphasen-Schlitzwandmasse mit einer baugrubenseitig freigelegten Oberfläche (3) sowie aus vertikalen, in die Einphasen-Schlitzwandmasse auf Abstand eingestellten Stützelementen (5) eine Ausfachung (6) bildet,
**dadurch gekennzeichnet,**
**daß** die Einphasen-Schlitzwandmasse mindestens einen wasserspeichernden Leichtzuschlagstoff aufweist.

2. Baugrubenverbau nach Anspruch 1, **dadurch gekennzeichnet, daß** der Leichtzuschlagstoff ein mineralischer poröser Leichtzuschlagstoff ist.

3. Baugrubenverbau nach Anspruch 2, **dadurch gekennzeichnet, daß** der Leichtzuschlagstoff in Mengen von 2 bis 20 M% in der Schlitzwandmasse enthalten ist.

4. Baugrubenverbau nach Anspruch 3, **dadurch gekennzeichnet, daß** der Leichtzuschlagstoff in Mengen von 3 bis 10 M% in der Schlitzwandmasse vorhanden ist.

5. Baugrubenverbau nach einem oder mehreren der Ansprüche 2 bis 4, **dadurch gekennzeichnet, daß** der Leichtzuschlagstoff ein Schüttgewicht von 0,05 bis 1,1 kg/l aufweist.

6. Baugrubenverbau nach einem oder mehreren der Ansprüche 2 bis 5, **dadurch gekennzeichnet, daß** der Leichtzuschlagstoff eine betonähnlich abgestufte Kornverteilung aufweist.

7. Baugrubenverbau nach einem oder mehreren der Ansprüche 2 bis 6, **dadurch gekennzeichnet, daß** der Leichtzuschlagstoff geblähten Vermiculit aufweist.

8. Baugrubenverbau nach einem oder mehreren der Ansprüche 2 bis 7, **dadurch gekennzeichnet, daß** der Leichtzuschlagstoff Porenbetongranulat aufweist.

9. Baugrubenverbau nach Anspruch 8, **dadurch gekennzeichnet, daß** der Leichtzuschlagstoff Papierfasern aufweist.

10. Baugrubenverbau nach einem oder mehreren der Ansprüche 1 bis 9, **dadurch gekennzeichnet, daß** die Einphasen-Schlitzwandmasse faserverstärkt ist.

11. Baugrubenverbau nach Anspruch 10, **dadurch gekennzeichnet, daß** die Fasern eine Länge von 6 bis 50, vorzugsweise von 10 bis 30 mm aufweisen und in Mengen von 0,4 bis 3, vorzugsweise von 0,7 bis 2 M%, bezogen auf die Trockensubstanz, enthalten sind.

12. Baugrubenverbau nach Anspruch 10 und/oder 11, **dadurch gekennzeichnet, daß** die Fasern Metallfasern sind.

13. Baugrubenverbau nach einem der Ansprüche 1 bis 12, **dadurch gekennzeichnet, daß** die Einphasen-Schlitzwandmasse ein hygroskopisches Salz in Mengen von 0,01 bis 10, vorzugsweise von 0,05 bis 2 M% enthält.

14. Baugrubenverbau nach Anspruch 13, **dadurch gekennzeichnet, daß** als hygroskopisches Salz Magnesiumchlorid enthalten ist.

15. Baugrubenverbau nach Anspruch 13 und/oder 14, **dadurch gekennzeichnet, daß** als hygroskopisches Salz Calciumchlorid enthalten ist.

16. Baugrubenverbau nach einem oder mehreren der Ansprüche 1 bis 15, **dadurch gekennzeichnet, daß** die Einphasen-Schlitzwandmasse mindestens ein organisches Mittel zur Erhöhung des Wasserrückhaltevermögens in Mengen von 0,01 bis 0,2, vorzugsweise von 0,05 bis 0,1 aufweist.

17. Baugrubenverbau nach Anspruch 16, **dadurch gekennzeichnet, daß** es ein Mittel auf der Basis von Methylcellulose enthält.

18. Baugrubenverbau nach einem oder mehreren der Ansprüche 1 bis 17, **dadurch gekennzeichnet, daß** die Stützelemente Doppel-T-Träger (5) sind.

19. Baugrubenverbau nach einem oder mehreren der Ansprüche 1 bis 18, **dadurch gekennzeichnet, daß** im Ausfachungsbereich (6) an sich bekannte Bewehrungsmittel angeordnet sind.

20. Baugrubenverbau nach Anspruch 19, **dadurch gekennzeichnet, daß** die Bewehrungsmittel an sich bekannte Bewehrungskörbe (7) sind.

21. Verfahren zur Herstellung eines Baugrubenverbaus, insbesondere eines Baugrubenverbaus nach einem oder mehreren der Ansprüche 1 bis 20, wobei
- eine Schlitzwand nach den Schlitzwandverfahren unter Verwendung einer Einphasen-Stützsuspension erstellt wird,
- in die Stützsuspension in Abständen Stützelemente eingestellt werden,
- nach der Erhärtung der Stützsuspension baugrubenseitig eine Oberfläche der Schlitzwand freigelegt wird, wobei eine Einphasen-Schlitzwandsuspension verwendet wird, die einen wasserspeichernden Leichtzuschlagstoff enthält.

22. Verfahren nach Anspruch 21, **dadurch gekennzeichnet, daß** eine Suspension verwendet wird, die folgende Bestandteile bezogen auf die Trockensubstanz in Masseprozenten enthält:
- Zement: 10 bis 30, vorzugsweise 15 bis 20 %,
- gemahlener Hüttensand: 40 bis 80, vorzugsweise 50 bis 70 M%,
- Gesteinsmehl: 5 bis 20, vorzugsweise 10 bis 15 M%,
- Tonkomponenten: 2 bis 10, vorzugsweise 3 bis 8 M%,
- Leichtzuschläge: 2 bis 20, vorzugsweise 3 bis 10 M%,

23. Verfahren nach Anspruch 21 und /oder 22, **dadurch gekennzeichnet, daß** eine Suspension verwendet wird, welche als Leichtzuschlagstoff einen mineralischen porösen Leichtzuschlagstoff enthält.

24. Verfahren nach einem oder mehreren der Ansprüche 21 bis 23, **dadurch gekennzeichnet, daß** eine Suspension verwendet wird, welche als Leichtzuschlagstoff einen Leichtzuschlagstoff mit einem Schüttgewicht von 0,05 bis 1,1 kg/l aufweist.

25. Verfahren nach einem oder mehreren der Ansprüche 21 bis 24, **dadurch gekennzeichnet, daß** eine Suspension verwendet wird, die als Leichtzuschlagstoff einen Leichtzuschlagstoff mit einer betonähnlich abgestuften Kornverteilung aufweist.

26. Verfahren nach einem oder mehreren der Ansprüche 21 bis 25, **dadurch gekennzeichnet,**
**daß** eine Suspension verwendet wird, die als Leichtzuschlagstoff Vermiculith aufweist.

27. Verfahren nach einem oder mehreren der Ansprüche 21 bis 26, **dadurch gekennzeichnet, daß** eine Suspension verwendet wird, die als Leichtzuschlagstoff Porenbetongranulat aufweist.

28. Verfahren nach einem oder mehreren der Ansprüche 21 bis 27, **dadurch gekennzeichnet, daß** eine Suspension verwendet wird, welche als Leichtzuschlagstoff Papierfasern aufweist.

29. Verfahren nach einem oder mehreren der Ansprüche 21 bis 28, **dadurch gekennzeichnet, daß** eine Suspension verwendet wird, die als Leichtzuschlagstoff Zeolithe oder zeolithisierte Vulkanite aufweist.

30. Verfahren nach Anspruch 29, **dadurch gekennzeichnet, daß** eine Suspension verwendet wird, die Zeolithe oder zeolithisierte Vulkanite in einer Menge von 2 bis 10 M% aufweist.

31. Verfahren nach Anspruch 29 und/oder 30, **dadurch gekennzeichnet, daß** eine Suspension verwendet wird, welche Zeolithe oder zeolithisierte Vulkanite in einer Menge von 3 bis 8 M% aufweist.

32. Verfahren nach einem oder mehreren der Ansprüche 21 bis 31, **dadurch gekennzeichnet, daß** eine faserverstärkte Stützsuspension verwendet wird.

33. Verfahren nach einem oder mehreren der Ansprüche 21 bis 32, **dadurch gekennzeichnet, daß** eine faserverstärkte Stützsuspension verwendet wird, die Fasern mit eine Länge von 6 bis 50 mm aufweist.

34. Verfahren nach Anspruch 32 und/oder 33, **dadurch gekennzeichnet, daß** eine faserverstärkte Stützsuspension verwendet wird, die Fasern mit einer Länge von 10 bis 30 mm aufweist.

35. Verfahren nach einem oder mehreren der Ansprüche 32 bis 34, **dadurch gekennzeichnet, daß** eine faserverstärkte Stützsuspension verwendet wird, welche Fasern in einer Menge von 0,4 bis 3 M% bezogen auf die Trockensubstanz enthält.

36. Verfahren nach einem oder mehreren der Ansprüche 32 bis 35, **dadurch gekennzeichnet, daß** eine faserverstärkte Stützsuspension verwendet wird, welche Fasern in einer Menge von 0,7 bis 2 M% bezogen auf die Trockensubstanz aufweist.

37. Verfahren nach einem oder mehreren der Ansprüche 21 bis 36, **dadurch gekennzeichnet, daß** der in den schlitzgefüllten, stützenden, noch nicht erhärteten Einphasenmasse ein Hygroskopisches Mittel zugemischt wird.

38. Verfahren nach Anspruch 37, **dadurch gekennzeichnet, daß** der Einphasenmasse bzw. der Stützsuspension ein hygroskopisches Mittel in Mengen von 0,01 bis 10 M% zugemischt wird.

39. Verfahren nach Anspruch 37 und/oder 38,
**dadurch gekennzeichnet,**
**daß** der Einphasenmasse bzw. der Stützsuspension als hygroskopisches Mittel Magnesiumchlorid zugemischt wird.

40. Verfahren nach einem oder mehreren der Ansprüche 37 bis 39, **dadurch gekennzeichnet, daß** der Einphasenmasse bzw. der Stützsuspension als hygroskopisches Mittel Calciumchlorid zugemischt wird.

41. Verfahren nach einem oder mehreren der Ansprüche 37 bis 40, **dadurch gekennzeichnet, daß** der Einphasenmasse bzw. der Stützsuspension ein organisches Mittel zur Erhöhung des Wasserrückhaltevermögens zugemischt wird.

42. Verfahren nach Anspruch 41, **dadurch gekennzeichnet, daß** der Einphasenmasse bzw. der Stützsuspension ein organisches Mittel zur Erhöhung des Wasserrückhaltevermögens in Mengen von 0,01 bis 0,2 M% zugemischt wird.

43. Verfahren nach Anspruch 41 und/oder 42, **dadurch gekennzeichnet, daß** als organisches Mittel zur Erhöhung des Wasserrückhaltevermögens eine Mittel auf Basis von Methylcellulose der Einphasenmasse bzw. der Stützsuspension zugemischt wird.

44. Baustoffgemenge für einen Baugrubenverbau, insbesondere für einen Baugrubenverbau nach einem oder mehreren der Ansprüche 1 bis 20, insbesondere zur Durchführung des Verfahrens nach einem oder mehreren der Ansprüche 21 bis 43, das zur Herstellung einer Einphasen-Schlitzwand-Suspension - wie an sich bekannt - zumindest die Trockengemenge-Bestandteile, Zement und Tonkomponenten, aufweist:
**dadurch gekennzeichnet,**
**daß** es zudem einen wasserspeichernden Leichtzuschlagstoff aufweist.

45. Baustoffgemenge nach Anspruch 44, **dadurch gekennzeichnet, daß** das Baustoffgemenge als Leichtzuschlagstoff einen mineralischen porösen Leichtzuschlagstoff aufweist.

46. Baustoffgemenge nach Anspruch 44 und/oder 45, **dadurch gekennzeichnet, daß** das Gemenge einen Leichtzuschlagstoff in Mengen von 2 bis 20 M% aufweist.

47. Baustoffgemenge nach einem oder mehreren der Ansprüche 44 bis 46, **dadurch gekennzeichnet, daß** das Gemenge Leichtzuschlagstoffe in Mengen von 3 bis 10 M% aufweist.

48. Baustoffgemenge nach einem oder mehreren der Ansprüche 44 bis 47, **dadurch gekennzeichnet, daß** das Gemenge einen Leichtzuschlagstoff mit einem Schüttgewicht von 0,05 bis 1,1 kg/l aufweist.

49. Baustoffgemenge nach einem oder mehreren der Ansprüche 44 bis 48, **dadurch gekennzeichnet, daß** das Gemenge einen Leichtzuschlagstoff mit einer betonähnlich abgestuften Kornverteilung aufweist.

50. Baustoffgemenge nach einem oder mehreren der Ansprüche 44 bis 49,
**dadurch gekennzeichnet,**
**daß** das Gemenge einen Leichtzuschlagstoff enthält, der geblähten Vermiculith aufweist.

51. Baustoffgemenge nach einem oder mehreren der Ansprüche 44 bis 50, **dadurch gekennzeichnet, daß** das Gemenge einen Leichtzuschlagstoff enthält, der Porenbetongranulat aufweist.

52. Baustoffgemenge nach einem oder mehreren der Ansprüche 44 bis 51, **dadurch gekennzeichnet, daß** das Gemenge einen Leichtzuschlagstoff enthält, welcher Papierfasern aufweist.

53. Baustoffgemenge nach Anspruch 44, **dadurch gekennzeichnet, daß** es mindestens ein Mittel zur Erhöhung des wasserrückhaltevermögens aufweist.

54. Baustoffgemenge nach Anspruch 53,
**dadurch gekennzeichnet,**
**daß** das Gemenge ein hygroskopisches Mittel aufweist.

55. Baustoffgemenge nach Anspruch 53 und/oder 54, **dadurch gekennzeichnet, daß** das Gemenge ein hygroskopisches Salz in Mengen von 0,01 bis 10 M% enthält.

56. Baustoffgemenge nach einem oder mehreren der Ansprüche 53 bis 55, **dadurch gekennzeichnet, daß** das Gemenge ein hygroskopisches Salz in Mengen von 0,05 bis 2 M% enthält.

57. Baustoffgemenge nach einem oder mehreren der Ansprüche 53 bis 56,
**dadurch gekennzeichnet,**
**daß** das Gemenge als hygroskopisches Salz Magnesiumchlorid enthält.

58. Baustoffgemenge nach einem oder mehreren der Ansprüche 53 bis 57,
**dadurch gekennzeichnet,**
**daß** das Gemenge als hygroskopisches Salz Calciumchlorid enthält.

59. Baustoffgemenge nach einem oder mehreren der Ansprüche 53 bis 58, **dadurch gekennzeichnet, daß** das Gemenge mindestens ein organisches Mittel zur Erhöhung des Wasserrückhaltevermögens aufweist.

60. Baustoffgemenge nach einem oder mehreren der Ansprüche 53 bis 59, **dadurch gekennzeichnet, daß** das Gemenge ein organisches Mittel zur Erhöhung des Wasserrückhaltevermögens in Mengen von 0,01 bis 0,2 M% aufweist.

61. Baustoffgemenge nach einem oder mehreren der Ansprüche 53 bis 60, **dadurch gekennzeichnet, daß** das Gemenge ein organisches Mittel zur Erhöhung des Wasserrückhaltevermögens in Mengen von 0,05 bis 0,1 M% aufweist.

62. Baustoffgemenge nach einem oder mehreren der Ansprüche 53 bis 61, **dadurch gekennzeichnet, daß** das Gemenge als organisches Mittel zur Erhöhung des Wasserrückhaltevermögens ein Mittel auf der Basis von Methylcellulose enthält.

63. Baustoffgemenge nach einem oder mehreren der Ansprüche 44 bis 62, **dadurch gekennzeichnet, daß** es Fasern aufweist.

64. Baustoffgemenge nach Anspruch 63, **dadurch gekennzeichnet, daß** das Gemenge Fasern mit einer Länge von 6 bis 50 mm aufweist.

65. Baustoffgemenge nach Anspruch 63 und/oder 64, **dadurch gekennzeichnet, daß** das Gemenge Fasern mit einer Länge von 10 bis 30 mm aufweist.

66. Baustoffgemenge nach einem oder mehreren der Ansprüche 63 bis 65, **dadurch gekennzeichnet, daß** das Gemenge Fasern in einer Menge von 0,4 bis 3 M% bezogen auf die Trockensubstanz aufweist.

67. Baustoffgemenge nach einem oder mehreren der Ansprüche 63 bis 66, **dadurch gekennzeichnet, daß** das Gemenge Fasern in einer Menge von 0,7 bis 2 M% bezogen auf die Trockensubstanz aufweist.

68. Baustoffgemenge nach einem oder mehreren der Ansprüche 44 bis 67,
**dadurch gekennzeichnet,**
**daß** es die folgenden Bestandteile aufweist:
- Zement (Portlandzement, Hochofenzement oder dergleichen),
- gemahlener Hüttensand,
- Gesteinsmehl,
- Tonkomponenten (Bentonit, kaolinitische Tone oder dergleichen),
- wasserspeichernde Leichtzuschläge
- Zeolithe oder zeolithisierte Vulkanite.

69. Baustoffgemenge nach Anspruch 68, **dadurch gekennzeichnet, daß** es die folgenden Bestandteile in Masseprozenten aufweist:
- Zement: 10 bis 30, vorzugsweise 15 bis 20 M%,
- gemahlener Hüttensand: 40 bis 80, vorzugsweise 50 bis 70 M%,
- Gesteinsmehl: 5 bis 20, vorzugsweise 10 bis 15 M%,
- Tonkomponenten: 2 bis 10, vorzugsweise 3 bis 8 M%,
- Leichtzuschläge: 2 bis 20, vorzugsweise 3 bis 10 M%,
- geeignet sind auch Zeolithe oder zeolithisierte Vulkanite: 2 bis 10, vorzugsweise 3 bis 8 M%.

## Claims

1. An excavation pit lining comprising a slit wall (2) comprising a hardened single-phase slit wall material having a surface (3) exposed on the pit side and vertical supporting elements (5) installed at intervals in the single-phase slit wall material so as to form paneling (6), wherein the single-phase slit wall composition comprises at least one water-storing lightweight aggregate.

2. An excavation pit lining as claimed in claim 1, wherein the lightweight aggregate is a porous mineral lightweight aggregate.

3. An excavation pit lining as claimed in claim 2, wherein the lightweight aggregate is present in the slit wall material in amounts of from 2 to 20% by mass.

4. An excavation pit lining as claimed in claim 3, wherein the lightweight aggregate is present in the slit wall material in amounts of from 3 to 10% by mass.

5. An excavation pit lining as claimed in one or more of claims 2 to 4, wherein the lightweight aggregate has a bulk density of from 0.05 to 1.1 kg/l.

6. An excavation pit lining as claimed in one or more of claims 2 to 5, wherein the lightweight aggregate has a particle size distribution which is gradated in a concrete-like manner.

7. An excavation pit lining as claimed in one or more of claims 2 to 6, wherein the lightweight aggregate comprises expanded vermiculite.

8. An excavation pit lining as claimed in one or more of claims 2 to 7, wherein the lightweight aggregate comprises granulated porous concrete.

9. An excavation pit lining as claimed in claim 8, wherein the lightweight aggregate comprises paper fibers.

10. An excavation pit lining as claimed in one or more of claims 1 to 9, wherein the single-phase slit wall material is fiber-reinforced.

11. An excavation pit lining as claimed in claim 10, wherein the fibers have a length of from 6 to 50 mm, preferably from 10 to 30 mm, and are present in amounts of from 0.4 to 3% by mass, preferably from 0.7 to 2% by mass, on a dry basis.

12. An excavation pit lining as claimed in claim 10 and/or 11, wherein the fibers are metal fibers.

13. An excavation pit lining as claimed in any of claims 1 to 12, wherein the single-phase slit wall material contains from 0.01 to 10% by mass, preferably from 0.05 to 2% by mass, of a hygroscopic salt.

14. An excavation pit lining as claimed in claim 13, wherein magnesium chloride is present as hygroscopic salt.

15. An excavation pit lining as claimed in claim 13 and/or 14, wherein calcium chloride is present as hygroscopic salt.

16. An excavation pit lining as claimed in one or more of claims 1 to 15, wherein the single-phase slit wall material contains from 0.01 to 0.2% by mass, preferably from 0.05 to 0.1% by mass, of an organic substance to increase the water retention capability.

17. An excavation pit lining as claimed in claim 16 which comprises a substance based on methylcellulose.

18. An excavation pit lining as claimed in one or more of claims 1 to 17, wherein the supporting elements are I-beam supports (5).

19. An excavation pit lining as claimed in one or more of claims 1 to 18, wherein reinforcements known per se are located in the paneling region (6).

20. An excavation pit lining as claimed in claim 19, wherein the reinforcements are reinforcing steel cages known per se (7).

21. A method of producing an excavation pit lining, in particular an excavation pit lining as claimed in one or more of claims 1 to 20, which comprises
- producing a slit wall by the slit wall method using a single-phase support suspension,
- installing supporting elements at intervals in the support suspension,
- exposing the pit-side surface of the slit wall after hardening of the support suspension, where the single-phase slit wall suspension used comprises a water-storing lightweight aggregate.

22. The method as claimed in claim 21, wherein the suspension used comprises the following constituents in percent by mass on a dry basis:
- cement: from 10 to 30%, preferably from 15 to 20%,
- ground slag: from 40 to 80% by mass, preferably from 50 to 70% by mass,
- ground rock: from 5 to 20% by mass, preferably from 10 to 15% by mass,
- clay components: from 2 to 10% by mass, preferably from 3 to 8% by mass,
- lightweight aggregates: from 2 to 20% by mass, preferably from 3 to 10% by mass.

23. The process as claimed in claim 21 and/or 22, wherein the suspension used comprises a porous mineral lightweight aggregate as lightweight aggregate.

24. The method as claimed in one or more of claims 21 to 23, wherein the suspension used comprises a lightweight aggregate having a bulk density of from 0.05 to 1.1 kg/l as lightweight aggregate.

25. The method as claimed in one or more of claims 21 to 24, wherein the suspension used comprises a lightweight aggregate having a particle size distribution which is gradated in a concrete-like manner as lightweight aggregate.

26. The method as claimed in one or more of claims 21 to 25, wherein the suspension used comprises vermiculite as lightweight aggregate.

27. The method as claimed in one or more of claims 21 to 26, wherein the suspension used comprises granulated porous concrete as lightweight aggregate.

28. The method as claimed in one or more of claims 21 to 27, wherein the suspension used comprises paper fibers as lightweight aggregate.

29. The method as claimed in one or more of claims 21 to 28, wherein the suspension used comprises zeolites or zeolitic vulcanites as lightweight aggregate.

30. The method as claimed in claim 29, wherein the suspension used contains from 2 to 10% by mass of zeolites or zeolitic vulcanites.

31. The method as claimed in claim 29 and/or 30, wherein the suspension used contains from 3 to 8% by mass of zeolites or zeolitic vulcanites.

32. The method as claimed in one or more of claims 21 to 31, wherein a fiber-reinforced support suspension is used.

33. The method as claimed in one or more of claims 21 to 32, wherein a fiber-reinforced support suspension comprising fibers having a length of from 6 to 50 mm is used.

34. The method as claimed in claim 32 and/or 33, wherein a fiber-reinforced support suspension comprising fibers having a length of from 10 to 30 mm is used.

35. The method as claimed in one or more of claims 32 to 34, wherein a fiber-reinforced support suspension containing from 0.4 to 3% by mass, on a dry basis, of fibers is used.

36. The method as claimed in one or more of claims 32 to 35, wherein a fiber-reinforced support suspension containing from 0.7 to 2% by mass, on a dry basis, of fibers is used.

37. The method as claimed in one or more of claims 21 to 36, wherein a hygroscopic substance is mixed into the supporting, not yet hardened single-phase material which has been introduced into the slit.

38. The method as claimed in claim 37, wherein from 0.01 to 10% by mass of a hygroscopic substance is mixed into the single-phase material or the support suspension.

39. The method as claimed in claim 37 and/or 38, wherein magnesium chloride is mixed as hygroscopic substance into the single-phase material or the support suspension.

40. The method as claimed in one or more of claims 37 to 39, wherein calcium chloride is mixed as hygroscopic material into the single-phase material or the support suspension.

41. The method as claimed in one or more of claims 37 to 40, wherein an organic substance is mixed into the single-phase material or the support suspension to increase the water retention capability.

42. The method as claimed in claim 41, wherein from 0.01 to 0.2% by mass of an organic substance which increases the water retention capability is mixed into the single-phase material or the support suspension.

43. The method as claimed in claim 41 and/or 42, wherein a substance based on methylcellulose is mixed into the single-phase material or the support suspension as organic substance for increasing the water retention capability.

44. A construction material mix for an excavation pit lining, in particular for an excavation pit lining as claimed in one or more of claims 1 to 20, in particular for implementing the method as claimed in one or more of claims 21 to 43, which comprises, as is known per se, at least the dry mix constituents cement and clay components for producing a single-phase slit wall suspension, and further comprises a water-storing lightweight aggregate.

45. A construction material mix as claimed in claim 44 which comprises a porous mineral lightweight aggregate as lightweight aggregate.

46. A construction material mix as claimed in claim 44 and/or 45 which contains from 2 to 20% by mass of a lightweight aggregate.

47. A construction material mix as claimed in one or more of claims 44 to 46 which contains from 3 to 10% by mass of lightweight aggregates.

48. A construction material mix as claimed in one or more of claims 44 to 47 which comprises a lightweight aggregate having a bulk density of from 0.05 to 1.1 kg/l.

49. A construction material mix as claimed in one or more of claims 44 to 48 which comprises a lightweight aggregate having a particle size distribution which is gradated in a concrete-like manner.

50. A construction material mix as claimed in one or more of claims 44 to 49 which comprises a lightweight aggregate comprising expanded vermiculite.

51. A construction material mix as claimed in one or more of claims 44 to 50 which comprises a lightweight aggregate comprising granulated porous concrete.

52. A construction material mix as claimed in one or more of claims 44 to 51 which comprises a lightweight aggregate comprising paper fibers.

53. A construction material mix as claimed in claim 44 which comprises at least one substance for increasing the water retention capability.

54. A construction material mix as claimed in claim 53 which comprises a hygroscopic substance.

55. A construction material mix as claimed in claim 53 and/or 54 which contains from 0.01 to 10% by mass of a hygroscopic salt.

56. A construction material mix as claimed in one or more of claims 53 to 55 which contains from 0.05 to 2% by mass of a hygroscopic salt.

57. A construction material mix as claimed in one or more of claims 53 to 56 which comprises magnesium chloride as hygroscopic salt.

58. A construction material mix as claimed in one or more of claims 53 to 57 which comprises calcium chloride as hygroscopic salt.

59. A construction material mix as claimed in one or more of claims 53 to 58 which comprises at least one organic substance to increase the water retention capability.

60. A construction material mix as claimed in one or more of claims 53 to 59 which contains from 0.01 to 0.2% by mass of an organic substance which increases the water retention capability.

61. A construction material mix as claimed in one or more of claims 53 to 60 which contains from 0.05 to 0.1% by mass of an organic substance which increases the water retention capability.

62. A construction material mix as claimed in one or more of claims 53 to 61 which comprises a substance based on methylcellulose as organic substance for increasing the water retention capability.

63. A construction material mix as claimed in one or more of claims 44 to 62 which comprises fibers.

64. A construction material mix as claimed in claim 63 which comprises fibers having a length of from 6 to 50 mm.

65. A construction material mix as claimed in claim 63 and/or 64 which comprises fibers having a length of from 10 to 30 mm.

66. A construction material mix as claimed in one or more of claims 63 to 65 which contains from 0.4 to 3% by mass, on a dry basis, of fibers.

67. A construction material mix as claimed in one or more of claims 63 to 66 which contains from 0.7 to 2% by mass, on a dry basis, of fibers.

68. A construction material mix as claimed in one or more of claims 44 to 67 which comprises the following constituents:
- cement (portland cement, blast furnace slag cement or the like),
- ground slag,
- ground rock,
- clay components (bentonite, kaolinitic clays or the like),
- water-storing lightweight aggregates,
- zeolites or zeolitic vulcanites.

69. A construction material mix as claimed in claim 68 which comprises the following constituents in percent by mass:
- cement: from 10 to 30% by mass, preferably from 15 to 20% by mass,
- ground slag: from 40 to 80% by mass, preferably from 50 to 70% by mass,
- ground rock: from 5 to 20% by mass, preferably from 10 to 15% by mass,
- clay components: from 2 to 10% by mass, preferably from 3 to 8% by mass,
- lightweight aggregates: from 2 to 20% by mass, preferably from 3 to 10% by mass,
- also suitable are zeolites or zeolitic vulcanites: from 2 to 10% by mass, preferably from 3 to 8% by mass.

## Revendications

1. Blindage de fouilles, se composant d'un rideau souterrain (2) fait d'une masse de rideau souterrain durcie à une phase ayant une surface libre sur le côté fouille (3) ainsi que des éléments de support (5) engagés à des intervalles dans la masse de rideau souterrain à une phase formant un remplissage (6), **caractérisé en ce que** la masse de rideau souterrain à une phase présente un agrégat léger capable de rétention d'eau.

2. Blindage de fouilles selon la revendication 1, **caractérisé en ce que** l'agrégat léger est un agrégat léger poreux minéral.

3. Blindage de fouilles selon la revendication 2, **caractérisé en ce que** l'agrégat léger est contenu dans la masse de rideau souterrain dans des quantités de 2 à 20 % en masse.

4. Blindage de fouilles selon la revendication 3, **caractérisé en ce que** l'agrégat léger est présent dans la masse de rideau souterrain dans des quantités de 3 à 10 % en masse.

5. Blindage de fouilles selon l'une quelconque ou plusieurs des revendications 2 à 4, **caractérisé en ce que** l'agrégat léger présente une densité en vrac de 0,05 à 1,1 kg/litre.

6. Blindage de fouilles selon l'une quelconque ou plusieurs des revendications 2 à 5, **caractérisé en ce que** l'agrégat léger présente une répartition granulométrique étagée similaire à celle du béton.

7. Blindage de fouilles selon l'une quelconque ou plusieurs des revendications 2 à 6, **caractérisé en ce que** l'agrégat léger présente de la vermiculite gonflée.

8. Blindage de fouilles selon l'une quelconque ou plusieurs des revendications 2 à 7, **caractérisé en ce que** l'agrégat léger présente un granulat de béton cellulaire.

9. Blindage de fouilles selon la revendication 8, **caractérisé en ce que** l'agrégat léger présente des fibres de papier.

10. Blindage de fouilles selon l'une quelconque ou plusieurs des revendications 1 à 9, **caractérisé en ce que** la masse de rideau souterrain à une phase est renforcée à l'aide de fibres.

11. Blindage de fouilles selon la revendication 10, **caractérisé en ce que** les fibres présentent une longueur de 6 à 50, de préférence de 10 à 30 mm et sont contenues dans des quantités de 0,4 à 3, de préférence de 0,7 à 2 % en masse, par rapport à la substance sèche.

12. Blindage de fouilles selon la revendication 10 et/ou 11, **caractérisé en ce que** les fibres sont des fibres métalliques.

13. Blindage de fouilles selon l'une quelconque des revendications 1 à 12, **caractérisé en ce que** la masse de rideau souterrain à une phase contient un sel hygroscopique dans des quantités de 0,01 à 10, de préférence de 0,05 à 2 % en masse.

14. Blindage de fouilles selon la revendication 13, **caractérisé en ce que** du chlorure de magnésium est contenu en tant que sel hygroscopique.

15. Blindage de fouilles selon la revendication 13 et/ou 14, **caractérisé en ce que** du chlorure de calcium est contenu en tant que sel hygroscopique.

16. Blindage de fouilles selon l'une quelconque ou plusieurs des revendications 1 à 15, **caractérisé en ce que** la masse de rideau souterrain à une phase présente au moins un agent organique en vue de l'augmentatio du pouvoir de rétention de l'eau dans des quantités de 0,01 à 0,2, de préférence de 0,05 à 0,1.

17. Blindage de fouilles selon la revendication 16, **caractérisé en ce qu'**il contient un agent à base de méthylcellulose.

18. Blindage de fouilles selon l'une quelconque ou plusieurs des revendications 1 à 17, **caractérisé en ce que** les éléments de support sont des poutrelles doubles en T (5).

19. Blindage de fouilles selon l'une quelconque ou plusieurs des revendications 1 à 18, **caractérisé en ce que** des agents d'armature connus en soi sont disposés dans le domaine à remplissage (6).

20. Blindage de fouilles selon la revendication 19, **caractérisé en ce que** les agents d'armature sont des cages d'armature (7) connues en soi.

21. Procédé en vue de la fabrication d'un blindage de fouilles, en particulier d'un blindage de fouilles selon l'une quelconque ou plusieurs des revendications 1 à 20,
- un rideau souterrain conformément au procédé du rideau souterrain étant construit par utilisation d'une suspension de support à une phase,
- des éléments de support étant placés à des intervalles dans la suspension de support,
- une surface du rideau souterrain étant dégagée du coté de la fouille après le durcissement de la suspension de support, une suspension de rideau souterrain à une phase, qui contient un agrégat léger capable de rétention d'eau, étant utilisée.

22. Procédé selon la revendication 21, **caractérisé en ce que** l'on utilise une suspension, qui contient, en pour cent en masse par rapport à la substance sèche, les constituants suivants :
- ciment : de 10 à 30, de préférence de 15 à 20 %,
- sable de sidérurgie moulu : de 40 à 80, de préférence de 50 à 70 % en masse,
- roche pulvérisée : de 5 à 20, de préférence de 10 à 15 % en masse,
- composants d'argile : de 2 à 10, de préférence de 3 à 8 % en masse,
- agrégats légers : de 2 à 20, de préférence de 3 à 10 % en masse.

23. Procédé selon la revendication 21 et/ou 22, **caractérisé en ce que** l'on utilise une suspension, qui contient, en tant qu'agrégat léger, un agrégat léger poreux minéral.

24. Procédé selon l'une quelconque ou plusieurs des revendications 21 à 23, **caractérisé en ce que** l'on utilise une suspension, qui présente, en tant qu'agrégat léger, un agrégat léger ayant une densité en vrac de 0,05 à 1,1 kg/litre.

25. Procédé selon l'une quelconque ou plusieurs des revendications 21 à 24, **caractérisé en ce que** l'on utilise une suspension qui présente, en tant qu'agrégat léger, un agrégat léger ayant une répartition granulométrique étagée similaire à celle du béton.

26. Procédé selon l'une quelconque ou plusieurs des revendications 21 à 25, **caractérisé en ce que** l'on utilise une suspension, qui présente en tant qu'agrégat léger de la vermiculite.

27. Procédé selon l'une quelconque ou plusieurs des revendications 21 à 26, **caractérisé en ce que** l'on utilise une suspension qui présente en tant qu'agrégat léger du granulat de béton cellulaire.

28. Procédé selon l'une quelconque ou plusieurs des revendications 21 à 27, **caractérisé en ce que** l'on utilise une suspension qui présente en tant qu'agrégat léger des fibres de papier.

29. Procédé selon l'une quelconque ou plusieurs des revendications 21 à 28, **caractérisé en ce que** l'on utilise une suspension qui présente en tant qu'agrégat léger une zéolite ou une vulcanite zéolitisée.

30. Procédé selon la revendication 29, **caractérisé en ce que** l'on utilise une suspension qui présente la zéolite ou la vulcanite zéolitisée dans une quantité de 2 à 10 % en masse.

31. Procédé selon la revendication 29 et/ou 30, **caractérisé en ce que** l'on utilise une suspension qui présente la zéolite ou la vulcanite zéolitisée dans une quantité de 3 à 8 % en masse.

32. Procédé selon l'une quelconque ou plusieurs des revendications 21 à 31, **caractérisé en ce que** l'on utilise une suspension de support renforcée par des fibres.

33. Procédé selon l'une quelconque ou plusieurs des revendications 21 à 32, **caractérisé en ce que** l'on utilise une suspension de support renforcée par des fibres, qui présente des fibres d'une longueur allant de 6 à 50 mm.

34. Procédé selon la revendication 32 et/ou 33, **caractérisé en ce que** l'on utilise une suspension de support renforcée par des fibres, qui présente des fibres d'une longueur allant de 10 à 30 mm.

35. Procédé selon l'une quelconque ou plusieurs des revendications 32 à 34, **caractérisé en ce que** l'on utilise une suspension de support renforcée par des fibres, qui contient des fibres dans une quantité de 0,4 à 3 % en masse, par rapport à la substance sèche.

36. Procédé selon l'une quelconque ou plusieurs des revendications 32 à 35, **caractérisé en ce que** l'on utilise une suspension de support renforcée par des fibres, la suspension présentant des fibres dans une quantité de 0,7 à 2 % en masse, par rapport à la substance sèche.

37. Procédé selon l'une quelconque ou plusieurs des revendications 21 à 36, **caractérisé en ce que** l'on mélange à la masse à une phase, non encore durcie, à fonction de support, remplie de fentes, un agent hygroscopique.

38. Procédé selon la revendication 37, **caractérisé en ce que** l'on mélange à la masse à une phase ou à la suspension de support un agent hygroscopique dans des quantités de 0,01 à 10 % en masse.

39. Procédé selon la revendication 37 et/ou 38, **caractérisé en ce que** l'on mélange à la masse à une phase ou à la suspension de support du chlorure de magnésium, en tant qu'agent hygroscopique.

40. Procédé selon l'une quelconque ou plusieurs des revendications 37 à 39, **caractérisé en ce que** l'on mélange à la masse à une phase ou à la suspension de support, du chlorure de calcium, en tant qu'agent hygroscopique.

41. Procédé selon l'une quelconque ou plusieurs des revendications 37 à 40, **caractérisé en ce que** l'on mélange à la masse à une phase ou à la suspension de support un agent organique en vue de l'augmentation du pouvoir de rétention de l'eau.

42. Procédé selon la revendication 41, **caractérisé en ce que** l'on mélange à la masse à une phase ou à la suspension de support un agent organique en vue de l'augmentation du pouvoir de rétention de l'eau dans des quantités de 0,01 à 0,2 % en masse.

43. Procédé selon la revendication 41 et/ou 42, **caractérisé en ce que** l'on mélange à la masse à une phase ou à la suspension de support, en tant qu'agent organique en vue de l'augmentation du pouvoir de rétention de l'eau, un agent à base de méthylcellulose.

44. Mélange de matériaux de construction pour un blindage de fouilles, en particulier pour un blindage de fouilles selon l'une quelconque ou plusieurs des revendications 1 à 20, en particulier en vue de l'exécution du procédé selon l'une quelconque ou plusieurs des revendications 21 à 43, qui présente, en vue de la préparation d'une suspension de rideau souterrain à une phase - comme connue en soi - tout au moins les constituants de mélange sec, du ciment et des composants d'argile, **caractérisé en ce qu'**il présente, de surcroît, un agrégat léger capable de rétention d'eau.

45. Mélange de matériaux de construction selon la revendication 44, **caractérisé en ce que** le mélange de matériaux de construction présente, en tant qu'agrégat léger, un agrégat léger poreux minéral.

46. Mélange de matériaux de construction selon la revendication 44 et/ou 45, **caractérisé en ce que** le mélange présente un agrégat léger dans des quantités de 2 à 20 % en masse.

47. Mélange de matériaux de construction selon l'une quelconque ou plusieurs des revendications 44 à 46, **caractérisé en ce que** le mélange présente des agrégats légers dans des quantités de 3 à 10 % en masse.

48. Mélange selon l'une quelconque ou plusieurs des revendications 44 à 47, **caractérisé en ce que** le mélange présente un agrégat léger ayant une densité en vrac de 0,05 à 1,1 kg/litre.

49. Mélange de matériaux de construction selon l'une quelconque ou plusieurs des revendications 44 à 48, **caractérisé en ce que** le mélange présente un agrégat léger ayant une répartition granulométrique étagée similaire à celle du béton.

50. Mélange de matériaux de construction selon l'une quelconque ou plusieurs des revendications 44 à 49, **caractérisé en ce que** le mélange contient un agrégat léger qui présente de la vermiculite gonflée.

51. Mélange de matériaux de construction selon l'une quelconque ou plusieurs des revendications 44 à 50, **caractérisé en ce que** le mélange contient un agrégat léger qui présente un granulat de béton cellulaire.

52. Mélange de matériaux de construction selon l'une quelconque ou plusieurs des revendications 44 à 51, **caractérisé en ce que** le mélange contient un agrégat léger qui présente des fibres de papier.

53. Mélange de matériaux de construction selon la revendication 44, **caractérisé en ce qu'**il présente au moins un agent en vue de l'augmentation du pouvoir de rétention de l'eau.

54. Mélange de matériaux de construction selon la revendication 53, **caractérisé en ce que** le mélange présente un agent hygroscopique.

55. Mélange de matériaux de construction selon la revendication 53 et/ou 54, **caractérisé en ce que** le mélange contient un sel hygroscopique dans des quantités de 0,01 à 10 % en masse.

56. Mélange de matériaux de construction selon l'une quelconque ou plusieurs des revendications 53 à 55, **caractérisé en ce que** le mélange contient un sel hygroscopique dans des quantités de 0,05 à 2 % en masse.

57. Mélange de matériaux de construction selon l'une quelconque ou plusieurs des revendications 53 à 56, **caractérisé en ce que** le mélange contient, en tant que sel hygroscopique, du chlorure de magnésium.

58. Mélange de matériaux de construction selon l'une quelconque ou plusieurs des revendications 53 à 57, **caractérisé en ce que** le mélange contient, en tant que sel hygroscopique, du chlorure de calcium.

59. Mélange de matériaux de construction selon l'une quelconque ou plusieurs des revendications 53 à 58, **caractérisé en ce que** le mélange présente au moins un agent organique en vue de l'augmentation du pouvoir de rétention de l'eau.

60. Mélange de matériaux de construction selon l'une quelconque ou plusieurs des revendications 53 à 59, **caractérisé en ce que** le mélange présente un agent organique en vue de l'augmentation du pouvoir de rétention de l'eau dans des quantités de 0,01 à 0,2 % en masse.

61. Mélange de matériaux de construction selon l'une quelconque ou plusieurs des revendications 53 à 60, **caractérisé en ce que** le mélange présente un agent organique en vue de l'augmentation du pouvoir de rétention de l'eau dans des quantités de 0,05 à 0,1 % en masse.

62. Mélange de matériaux de construction selon l'une quelconque ou plusieurs des revendications 53 à 61, **caractérisé en ce que** le mélange contient, en tant qu'agent organique en vue de l'augmentation du pouvoir de rétention de l'eau, un agent à base de méthylcellulose.

63. Mélange de matériaux de construction selon l'une quelconque ou plusieurs des revendications 44 à 62, **caractérisé en ce qu'**il présente des fibres.

64. Mélange de matériaux de construction selon la revendication 63, **caractérisé en ce que** le mélange présente des fibres ayant une longueur allant de 6 à 50 mm.

65. Mélange de matériaux de construction selon la revendication 63 et/ou 64, **caractérisé en ce que** le mélange présente des fibres ayant une longueur allant de 10 à 30 mm.

66. Mélange de matériaux de construction selon l'une quelconque ou plusieurs des revendications 63 à 65, **caractérisé en ce que** le mélange présente des fibres dans une quantité de 0,4 à 3 % en masse, par rapport à la substance sèche.

67. Mélange de matériaux de construction selon l'une quelconque ou plusieurs des revendications 63 à 66, **caractérisé en ce que** le mélange présente des fibres dans une quantité de 0,7 à 2 % en masse, par rapport à la substance sèche.

68. Mélange de matériaux de construction selon l'une quelconque ou plusieurs des revendications 44 à 67, **caractérisé en ce qu'**il présente les constituants suivants :
- ciment (ciment Portland, ciment de haut fourneau ou similaire),
- sable de sidérurgie moulu,
- roche pulvérisée,
- composants d'argile (bentonite, argiles kaoliniques ou similaires),
- agrégats légers capables de rétention d'eau
- zéolites ou vulcanites zéolitisées.

69. Mélange de matériaux de construction selon la revendication 68, **caractérisé en ce qu'**il présente les constituants suivants en pour cent en masse :
- ciment : de 10 à 30, de préférence de 15 à 20 % en masse,
- sable de sidérurgie moulu : de 40 à 80, de préférence de 50 à 70 % en masse,
- roche pulvérisée : de 5 à 20, de préférence de 10 à 15 % en masse,
- composants d'argile : de 2 à 10, de préférence de 3 à 8 % en masse,
- agrégats légers : de 2 à 20, de préférence de 3 à 10 % en masse,
- sont aussi appropriées des zéolites ou des vulcanites zéolitisées : de 2 à 10, de préférence de 3 à 8 % en masse.
